# EUROPÄISCHE PATENTANMELDUNG

(11) **EP 1 998 194 A2**
(43) Veröffentlichungstag der Anmeldung: **03.12.2008**
(21) Anmeldenummer: 08405139.0
(22) Anmeldetag: 21.05.2008
(51) Int. Cl.: G02B 5/20, G02B 5/22, G02B 5/28, G02B 5/23

(54) **Optisches Schutzfilter und Verfahren zu dessen Herstellung**

(30) Priorität: 29.05.2007 CH 8522007
(71) Anmelder: SPERIAN Welding Protection AG, 9630 Wattwil (CH)
(72) Erfinder: Cottier, Kaspar, 8645 Jona (CH)
(74) Vertreter: Frei Patent Attorneys

(57) **Zusammenfassung**

Ein optisches Schutzfilter (1, 3) weist mindestens eine erste und eine zweite Teillinse (1, 2) auf, wobei die erste Teillinse (1) ein flexibles Substrat (4) aufweist, auf dem Substrat (4) ein Dünnschicht-Filter (2) aufgebracht ist, und das Dünnschicht-Filter (2) mindestens eine metallische Schicht (8) mit einer Schichtdicke zwischen 2 nm und 100 nm aufweist. Das Substrat (4) im fertigen Schutzfilter ist dank seiner Flexibilität als Ganzes in die endgültige Form gebogen; im Gegensatz zu Linsen, welche zwar eine gekrümmte Form und gekrümmte Oberflächen aufweisen, aber in diese gekrümmte Form geschliffen oder gegossen wurden.

## Beschreibung

Die Erfindung bezieht sich auf das Gebiet der optischen Schutzfilter, insbesondere für Laserschutzfilter und Blendschutzfilter. Sie bezieht sich auf ein optisches Schutzfilter und ein Verfahren zur Herstellung eines optischen Schutzfilters gemäss dem Oberbegriff der entsprechenden unabhängigen Patentansprüche.

### STAND DER TECHNIK

Optische Schutzfilter werden beispielsweise als Laserschutzfilter, insbesondere im IR (Infrarot)bereich eingesetzt, oder als Blendschutzfilter wie zum Beispiel als Schweisserschutzfilter in Masken oder Brillen für Schweisser.

Es gibt auf dem Markt zwei Sorten IR Schutzfilter, die für den Laserschutz eingesetzt werden können: Absorptionsfilter und Dünnschichtfilter. Die zwei können auch kombiniert werden. Dünnschichtfilter haben eine hohe Transmission im sichtbaren Wellenlängenbereich (VLT, visible light transmission), erreichen aber nicht eine hohe optische Absorption. Zudem ist die Fabrikation von solchen Dünnschichtfiltern auf die gekrümmten Oberflächen von Schutzbrillen mit Schwierigkeiten verbunden und teuer. Insbesondere die Homogenität der Schichten und sogenannte "Pinholes", d.h. mikroskopische Defekte der Dünnschichten, sind Probleme, welche den Ausschuss von Halbfabrikaten erhöhen. Zudem sind die Dünnschichtfilter sehr kratzempfindlich, und können in der Regel, auch wenn sie mit einem Schutzlack versehen sind, nicht für Anwendungen in einer rauhen Umgebung eingesetzt werden. Beide Filterarten, also auf Basis von Absorption und auf Basis von Dünnschichtfiltern, sind in der Regel nur für einen bestimmten Wellenlängenbereich einsetzbar. Für Umgebungen, die Gefährdungen durch verschiedene Wellenlängen zeigen, zum Beispiel im militärischen Bereich, und somit einen breitbandigen Schutz bedingen, müssen verschiedene Absorptionsfilter und/oder Dünnschichtfilter kombiniert werden, was wiederum die Herstellkosten erhöht.

Als Grundmaterial für Schutzfilter sind Mineralglas und Kunststoffe bekannt. Dabei sind Kunststoff-Brillen leichter im Gewicht, können aber in der Regel nicht den hohen Energiedichten standhalten, die bei den in verschiedenen einschlägigen Sicherheitsnormen zum Augenschutz vorgeschriebenen Laser-Belastungsproben entstehen.

US 7,008,056 beschreibt eine Schutzbrille, welche in einer bevorzugten Ausführung einen Dünnschichtfilter enthält, der zwischen zwei Kunstoff-Linsen-Schichten eingelagert ist, und so vor mechanischem Abrieb geschützt ist. Die Herstellung einer solchen Brille ist jedoch kostenintensiv, und bietet keinen breitbandigen Schutz vor IR-Strahlung.

### DARSTELLUNG DER ERFINDUNG

Es ist deshalb Aufgabe der Erfindung, ein optisches Schutzfilter und ein Verfahren zu dessen Herstellung der eingangs genannten Art zu schaffen, welche die oben genannten Nachteile behebt.

Es ist deshalb Ziel der Erfindung, ein optisches Schutzfilter für insbesondere den Infrarot-Bereich herzustellen, welcher die Strahlung mit einer einzigen Beschichtung breitbandig abblockt. Weitere Ziele der Erfindung sind, dass das Schutzfilter kostengünstig herstellbar, leicht im Gewicht und unempfindlich bezüglich Verkratzen ist. Ein weiteres Ziel der Erfindung ist, eine IR-Schutzbrille herzustellen, welche eine erhöhte Schlagfestigkeit aufweist. Ein weiteres Ziel der Erfindung ist, ein Verfahren zur Herstellung eines optischen Schutzfilters bereitzustellen, welches eine hohe Fertigungsqualität und Ausbeute gewährleistet. Ein weiteres Ziel der Erfindung ist es, einen Schutzfilter mit Blendschutzfunktion herzustellen, welcher eine variable Transmission der Lichtintensität im sichtbaren Wellenlängen-Bereich gewährt.

Diese Aufgabe lösen ein optisches Schutzfilter und ein Verfahren zu dessen Herstellung mit den Merkmalen der entsprechenden unabhängigen Patentansprüche.

Das optisches Schutzfilter weist mindestens eine erste und eine zweite Teillinse auf, wobei die erste Teillinse ein flexibles Substrat aufweist, auf dem Substrat ein Dünnschicht-Filter aufgebracht ist, und das Dünnschicht-Filter mindestens eine metallische Schicht mit einer Schichtdicke zwischen 2 nm (nanometer) und 100 nm aufweist. Das Substrat im fertigen Schutzfilter ist dank seiner Flexibilität als Ganzes in die endgültige Form gebogen; im Gegensatz zu Linsen, welche zwar eine gekrümmte Form und gekrümmte Oberflächen aufweisen, aber in diese gekrümmte Form geschliffen oder gegossen wurden.

Die Funktion des Dünnschichtfilters ("thin film optical filter") oder dichroischen Filters beruht bekannterweise darauf, dass das Filter eine Mehrzahl von Schichten mit unterschiedlichen Brechungsindizes aufweist ("dielectric stacks"). Die Schichtdicken liegen im Bereich der optischen Wellenlängen und sind als Bragg-Reflektor ausgebildet, so dass für vorgegebene Wellenlängen Interferenzen auftreten, wodurch bestimmte Wellenlängen durchgelassen und andere reflektiert werden. Durch die Anzahl und Dicke der Schichten können die Bandbreite, die Wellenlängen und die Amplituden der durchgelassenen und reflektierten Lichtanteile eingestellt werden.

Durch die Verwendung eines Dünnschicht-Filter mit metallischen Schichten wird es überraschenderweise möglich, das Dünnschicht-Filter mit dem flexiblen Substrat zu biegen, wobei die mehren gestapelten Schichten des Dünnschicht-Filters durch das Biegen nicht zerstört oder beschädigt werden. Dies steht im Gegensatz zu den Erwartungen aus dem Stand der Technik, beispielsweise in der bereits erwähnten US 7,008,056, wo die Wichtigkeit eines starren Substrates betont wird, da das Verziehen oder Biegen von dielektrischen Stapeln zu deren Beschädigung führen könne. Durch die Verwendung der metallischen Zwischenschichten ist zudem eine breitbandige Filterung möglich. Die Filter funktionieren somit nicht mehr als Bragg-Reflektor, sondern absorbieren und reflektieren einen Grossteil der elektromagnetischen Strahlung an den metallischen Schichten, ausser des Teils des Spektrums für welches konstruktive Interferenz auftritt, ähnlich einem Fabry-Perot Resonator.

Die Flexibiltät des Substrates der ersten Teillinse bewirkt, dass zuerst beschichtet und anschliessend in die Form biegbar ist, in welcher es im fertigen Schutzfilter verwendet wird. Damit ist es möglich, bekannte planare Beschichtungsprozesse zu verwenden, welche eine bessere Qualität als Verfahren zur Beschichtung von gekrümmten Oberflächen ermöglichen.

Das Dünnschichtfilter weist vorzugsweise abwechslungsweise eine Schicht aus einem Dielektrikum und einem Metall auf. Die Dielektrikumschichten weisen einen relativ hohem Brechungsindex und eine Dicke im Bereich von λ/2 oder λ/4 auf, wobei λ die Wellenlänge der zu transmittierenden Komponente ist.

Die Metallschichten aus beispielsweise Silber oder Aluminium weisen eine wesentlich kleinere Dicke, in der Grössenordnung von beispielsweise 10 nm (nanometer) auf. Damit sind sie rund 10 bis 20 bis 50 mal dünner als die Dielektrikumschichten.

In einer bevorzugten Ausführungsform des Erfindungsgegenstandes weist das Dünnschichtfilter lediglich zwei äussere Dielektrikum-Schichten mit einer Dicke von rund λ/4 auf, sowie eine mittige metallische Schicht. In anderen bevorzugten Ausführungsformen der Erfindung liegen weitere Dielektrikum-Schichten im Inneren des Filters vor, mit einer Dicke von jeweils rund λ/2. Als Dielektrika werden nichtleitende optisch transparente Materialen, typischerweise Metalloxide, verwendet, wie zum Beispiel Al₂O₃, SiO₂, TiO₂, HfO₂, ZnS oder Ta₂O₅. Alternativ können einzelne oder alle der Dielektrikum-Schichten aus organischen Dielektrika bestehen.

In einer weiteren bevorzugten Ausführungsform des Erfindungsgegenstandes wird durch die Wahl der Schichtdicken das optische Filter als Laserschutzfilter ausgebildet, insbesondere für den Infrarotbereich, d.h. für Wellenlängen zwischen 800 nm und 2000 nm. Dabei realisiert das Filter vorzugsweise eine Schutzstufe von mehr als L4, d.h. eine Minderung der Intensität um mehr als den Faktor 10'000. Gleichzeitig realisiert das Filter vorzugsweise im sichtbaren Bereich eine Transmission von über 30%. Dazu besteht das Dünnschichtfilter typischerweise aus 10 bis 20 alternierender Schichten von Metallen und Dielektrika.

In einer weiteren bevorzugten Ausführungsform der Erfindung weist das optische Schutzfilter bei einer Wellenlänge von 532 nm eine Schutzstufe grösser oder gleich L4 auf, insbesondere durch einen in mindestens einer der Teillinsen eingebrachten Farbstoff. Damit realisiert das optische Filter eine kombinierte Schutzwirkung in verschiedenen Wellenlängenbereichen. Anstelle der Filterung bei 532 nm (entsprechend einem Nd:YAG Laser) kann die Filterung auch alternativ oder zusätzlich auf andere Wellenlängen ausgerichtet sein, z.B. 266 nm, 355 nm, 1064 nm. Diese Farbstoffe können beispielsweise aus Metallo-Porphyrinen, Metallo-Phthalocyaninen und deren Verwandten, Cyaninen oder anderen Verbindungen bestehen, die bestimmte Wellenlängen im elektromagnetischen Spektrum absorbieren.

In einer weiteren bevorzugten Ausführungsform der Erfindung weist das optische Schutzfilter eine oder mehrere steuerbare oder selbstständig abdunkelnde optische Filterschichten auf, um die sichtbare Lichttransmission zu beeinflussen respektive zu variieren. Dabei sind vorzugsweise auch diese Filterschichten auf gekrümmten, gebogenen und gegebenenfalls auch flexiblen Substraten angeordnet. Die steuerbaren Schichten beruhen beispielsweise auf elektrisch angesteuerten Flüssigkristallen, zum Beispiel vom Typ Twisted nematic (TN), Supertwisted nematic (STN), Low twisted nematic (LTN), High twisted nematic (HTN), hybrid aligned (HA), Vertically aligned (VA), Optically compensated Bend mode (OCB). Es können auch Guest-Host Zellen verwendet werden, oder PLZT-Modulatoren, Modulatoren die auf dem elektro-optischen Effekt beruhen, oder elektrochrome Materialien. Alternativ können die Schichten auch selbständig abdunkeln abhängig von einer eintreffenden Lichtintensiät, wie zum Beispiel mit photochromen Materialien oder reverssaturierbaren Absorbern. Es können auch mehrere solcher Schichten verwendet werden, um den Kontrast zu erhöhen. Selbständig abdunkelnde Materialien können auch in das Material einer oder mehrerer der Teillinsen eingebracht sein, so dass keine zusätzliche Schicht oder Folie erforderlich ist. Es ist auch möglich, mehrere solcher zeitlich variablen Filterschichten seriell anzuordnen, wobei die mehreren Filterschichten sowohl vor als auch nach dem Dünnschichtfilter angeordnet sein können. Mit diesen variablen Filterschichten kann die weitere Funktion eines Blendschutzfilters realisiert werden, beispielsweise für den Augenschutz bei Schweissvorgängen.

In weiteren bevorzugten Ausführungsformen der Erfindung sind holographische Schutzschichten innerhalb des Filters angebracht, und/oder weitere Schichten wie Anti-Fog-Schichten oder kratzfeste Schichten auf die Aussenseite der Filteranordnung aufgebracht.

Zur Herstellung eines optischen Filters wird vorzugsweise wie folgt vorgegangen: Die Schichten des Dünnschichtfilters werden in bekannter Weise auf ein plan resp. eben angeordnetes Substrat aufgebracht, also beispielsweise durch Aufdampfen, einen chemischen Prozess oder Sputtering. Dabei ist aber das Substrat aus einem flexiblen Material, und wird anschliessend in eine Form gebogen, in welcher es im fertigen Schutzfilter verwendet wird. Diese Form kann beispielsweise erreicht werden, indem das Substrat gegen eine zweite, gekrümmte und vergleichsweise inflexible Teillinse gebogen und befestigt wird, oder indem das Substrat gebogen in eine Giessform eingelegt und mit einem Material umspritzt wird, welches nach dem Aushärten die zweite Teillinse bildet. Das Substrat kann auch auf beiden Seiten umspritzt werden, so dass also eine zweite und eine dritte Teillinse gebildet werden.

Das Biegen des Substrates findet vorzugsweise nur in einer Richtung statt, so dass das Substrat und damit die erste Teillinse zylindrische Oberflächen aufweist. Dabei weist auch die zweite Teillinse vorzugsweise eine oder zwei zylindrische Oberflächen auf. Es ist jedoch auch denkbar, dass eine leichte Biegung in eine zweite Richtung vorgenommen wird, so dass die Oberflächen in etwa Ellipsiodflächen sind. Ferner findet das Biegen vorzugsweise bei normalen Umgebungstemperaturen, also ohne Erwärmung statt.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: ein optisches Schutzfilter im Querschnitt;
- Figur 2: eine Variante des optischen Schutzfilters;
- Figur 3: Verfahrensschritte zum Herstellen eines Schutzfilters; und
- Figuren 4 und 5: Schutzfilter mit Filterschichten mit variabler Transmission

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

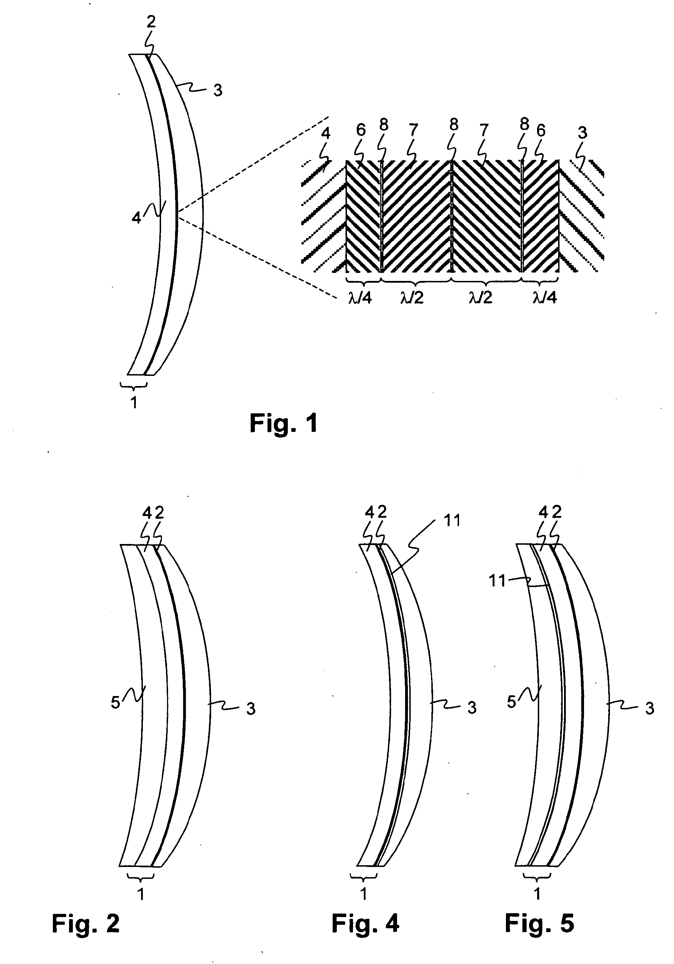

**Figur 1** zeigt einen Querschnitt durch ein optisches Schutzfilter aus zwei Teillinsen oder Halblinsen 1, 3, welche z.B. mit einem Klebstoff zusammengefügt sind. Die erste Halblinse 1, in einer bevorzugten Ausführung die innere, weist ein flexibles Substrat 4 und ein Dünnschichtfilter 2 auf. Das Dünnschichtfilter 2 weist eine oder mehrere Licht absorbierende Metallschichten, und damit abwechselnd mehrere dielektrische Schichten, z.B. Metall-Oxid-Schichten, welche in konstruktiver Interferenz zu einer hohen Lichtdurchlässigkeit im sichtbaren Bereich führen. Eine solche Filterschicht 2 ist, im Gegensatz zu puren dielektrischen Schichten aus Metalloxiden, flexibel und bricht auch bei relativ kleinen Biegeradien nicht! Eine solche Filterschicht 2 ist also hervorragend geeignet, um auf ein flexibles Substrat 4 im flachen Zustand aufgebracht zu werden, was den Herstellungsprozess massiv vereinfacht. Anschliessend kann das Substrat 4 zusammen mit der Filterschicht 2 in die endgültige Form gebogen werden. Dabei betragen die Biegeradien typischerweise 50-100 mm, die Substratdicke 0.5mm-2mm, und die Substrate sind typischerweise aus einem transparenten Polymer wie Polycarbonat (PC) oder Acrylglas (PMMA). Flexibel bedeutet hier, dass das Substrat vom ursprünglich flachen Zustand in einen zumindest in einer Dimension gekrümmten Zustand gebracht werden kann, ohne dass es durch Bruch, Risse, Splitter etc. beschädigt wird. Das Biegen erfolgt typischerweise bei Raumtemperatur, kann aber auch unter erhöhten Temperaturen stattfinden, um das Biegen zu erleichtern.

Das Substrat 4 wird vorzugsweise aus einer Platte ausgestanzt oder im Spritzgussverfahren hergestellt. Dabei kann es auf der unbeschichteten Seite - im ungebogenen Zustand - eine gekrümmte Fläche aufweisen. Nach dem Biegen ergeben sich somit unterschiedliche Krümmungsradien der äusseren und der inneren Fläche. Dadurch ist es möglich, die optischen Aberrationen der gesamten Anordnung 1, 2, 3 zu verkleinern.

Eine schematische, vergrösserte Ansicht des Dünnschichtfilters 2 ist ebenfalls in der **Figur 1** gezeigt. Auf das Substrat 4 sind eine äussere Dielektrikum-Schicht 6, eine Metallschicht 8 und dann eine innere Dielektrikum-Schicht 7 aufgebracht. Anschliessend folgen vorzugsweise mehrere innere Dielektrikum-Schichten 7 und Metallschichten 8 jeweils alternierend, und zum Abschluss des Filters wieder eine äussere Dielektrikum-Schicht 6.

Die zweite Teillinse oder Halblinse 3, in einer bevorzugten Ausführung die äussere, bietet mechanischen Schutz. Sie ist vorzugsweise weniger flexibel als die erste Teillinse 1, indem sie entweder dicker als diese und/oder aus einem weniger flexiblen Material gefertigt ist. Dadurch stabilisiert die zweite Teillinse 3 die Form der ersten Teillinse 1 und definiert dadurch die Krümmung des Filters 2. Die Verwendung eines anderen Materials für die zweite Teillinse 3 als für das Substrat 4 ermöglicht die Herstellung einer äusserst schlagfesten Schutzbrille. So kann zum Beispiel für die zweite Teillinse 3 ein hartes Material verwendet werden, welches splittern darf, wobei die dahinter liegende, innere und flexible erste Teillinse 1 anschliessend das Auge vor den Splittern schützt. Als Material für die zweite Teillinse 3 kann in einer bevorzugten Ausführung ein Acrylharz wie zum Beispiel Polymethylmethacrylat (PMMA) verwendet werden.

Die zweite Teillinse 3 kann ebenfalls innen und aussen unterschiedliche Krümmungsradien aufweisen, um Aberrationen zu verringern.

In einer bevorzugten Ausführung weist die zweite Teillinse 3 eine 1-dimensionale Krümmung auf, was ein einfaches in-Form-bringen der ersten Teillinse 1 ermöglicht. Eine eindimensionale Krümmung entspricht einem verallgemeinerten Zylinder, und im Spezialfall einem Kreiszylinder oder einem elliptischen Zylinder.

Es können weitere Teillinsen vorliegen, beispielsweise eine optionale dritte Teillinse 5 derart, dass die erste Teillinse 1 zwischen der zweiten Teillinse 3 und der dritten Teillinse 5 angeordnet ist. Dies ist in der **Figur 2** im Querschnitt dargestellt. In einem weiteren Beispiel (nicht dargestellt), kann eine dritte Teillinse 5 oder ein Laminat von zusätzlichen Linsen der zweiten Teillinse 3 vorgelagert sein, um die Schlagfestigkeit weiter zu erhöhen.

Eine oder mehrer der Teillinsen 1, 3, 5 kann zudem mit einem absorbierenden Farbstoff im Material der Teillinsen 1, 3, 5 versehen sein, um einen zusätzlichen Schutz in bestimmten Wellenlängenbereichen zu geben. Z.B. Laserschutz für 532 nm.

**Figuren 4** und **5** zeigen eine Ausführungsform der Erfindung, in welcher weitere Filterschichten 11 mit zeitlich variabler Transmission - insbesondere im sichtbaren Bereich - vorliegen. Die Filterschichten 11 sind vorzugsweise steuerbare Flüssigkristall- oder guest-host Zellen, oder photochrome Materialien in eigenen Schichten oder Folien, oder eingelagert in das Material einer oder mehrerer der Teillinsen. Es können auch mehrere Zellen in Serie geschaltet werden, um den Kontrast zu erhöhen.

In der **Figur 4** ist die variable Filterschicht 11 vor oder ausserhalb - bezüglich der Lichteinfallsrichtung - des Dünnschichtfilters 2 angeordnet. Es wird hier, wie in den anderen Figuren, davon ausgegangen dass Licht von rechts oder von aussen gegen die konvexe Seite des Filters fällt, und sich ein Beobachter mit seinen Augen links oder "innen" bei der konkaven Seite befindet. Die variable Filterschicht 11, insbesondere eine Flüssigkristallzelle, ist durch die umgebenden Teillinsen geschützt, und es ist keine zusätzliche Linse erforderlich. Ferner werden Reflektionen des IR-Filters nach aussen teilweise absorbiert, was bei militärischen Anwendungen von Vorteil ist.

In der **Figur 5** ist die variable Filterschicht 11 nach oder innerhalb des Dünnschichtfilters 2 angeordnet. Dies hat den Vorteil, dass eine Degradation der Filterschicht 11 durch UV-Licht vermindert wird, was sonst bei organischen Komponenten wie Polarisatoren und Flüssigkristallen ein Problem sein kann.

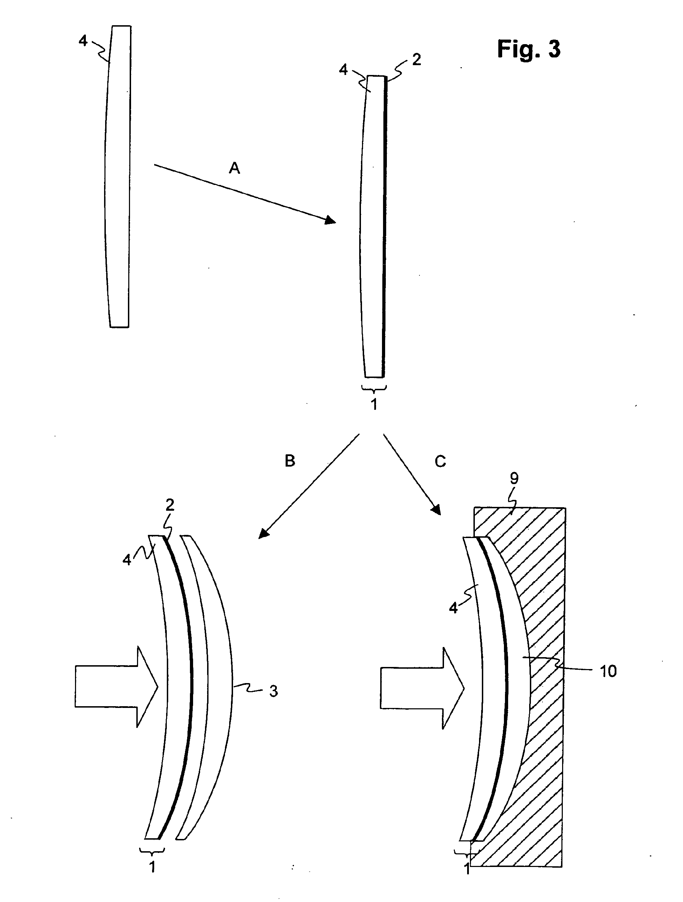

In der **Figur 3** sind Verfahrensschritte zum Herstellen eines zusammengesetzten Schutzfilters illustriert. Ausgehend von einem Substrat 4 werden in einem ersten Schritt A die Schichten des Dünnschichtfilters 2 auf eine plane Fläche des Substrates 4 aufgebracht. Anschliessend wird beispielsweise einem weiteren Schritt B die so gebildete erste Teillinse 1 gebogen - wie durch den Blockpfeil angedeutet - und mit der zweiten Teillinse 3 verbunden oder an dieser fixiert. Dieses Verbinden oder Fixieren geschieht beispielsweise durch Verkleben mit einem transparenten Klebstoff über die ganze Fläche der Teillinsen, oder Kleben oder Zusammenklemmen der Teillinsen in einem Randbereich (nicht eingezeichnet). Die Klebstoffe können zum Beispiel auf Basis von Epoxy, Acrylaten oder Silikonen etc. sein, und können in Form von Flüssigklebstoff oder Klebefolien oder anderen entsprechender geeigneter Formen bereitgestellt werden, welche zum optischen Verkleben von transparenten Laminaten verwendet werden.

Alternativ (Schritt C) wird die erste Teillinse 1 gebogen - wie durch den Blockpfeil angedeutet - und in eine Spritzgussform 9 eingelegt und zumindest auf der Seite, welche das Dünnschichtfilter 2 trägt, umspritzt. Dadurch wird die zweite Teillinse 3 in einem Hohlraum 10 der Form 9 gebildet. Analog kann auch auf der anderen Seite eine dritte Teillinse 5 angesetzt oder angespritzt werden.

### BEZUGSZEICHENLISTE

- 1: erste Teillinse
- 2: Dünnschichtfilter
- 3: zweite Teillinse
- 4: Substrat
- 5: dritte Teillinse
- 6: äussere Dielektrikum-Schicht
- 7: innere Dielektrikum-Schicht
- 8: Metallschicht
- 9: Spritzgussform
- 10: Hohlraum
- 11: Filterschicht mit variabler Transmission

## Patentansprüche

1. Optisches Schutzfilter, aufweisend mindestens eine erste und eine zweite Teillinse (1, 3), wobei die erste Teillinse (1) aus einem flexiblen Substrat (4) hergestellt ist, auf dem Substrat (4) ein Dünnschicht-Filter (2) aufgebracht ist, und das Dünnschicht-Filter (2) mindestens eine metallische Schicht (8) mit einer Schichtdicke zwischen 2 nm und 100 nm aufweist.

2. Optisches Schutzfilter gemäss Anspruch 1, wobei mindestens die erste Teillinse (1) und vorzugsweise auch die zweite Teillinse (3) eine Krümmung in mindestens einer Richtung aufweist.

3. Optisches Schutzfilter gemäss einem der vorangehenden Ansprüche, wobei die Teillinsen (1, 3) formschlüssig aneinander liegen und vorzugsweise miteinander verklebt sind.

4. Optisches Schutzfilter gemäss einem der vorangehenden Ansprüche, wobei eine äussere Teillinse (3) aus einem Material mit erhöhter Schlagzähigkeit besteht, und eine innere Teillinse (1) aus einem anderen Material.

5. Optisches Schutzfilter gemäss einem der vorangehenden Ansprüche, wobei das Dünnschicht-Filter (2) abwechslungsweise Dielektrikum-Schichten (6, 7) und metallische Schichten (8) aufweist, wobei vorzugsweise die Dielektrikum-Schichten (7, 8) mindestens zehn mal dicker als die metallischen Schichten (8) sind, und die beiden äusseren Schichten (6) des Dünnschicht-Filters (2) Dielektrikum-Schichten sind.

6. Optisches Schutzfilter gemäss einem der vorangehenden Ansprüche, welches als Laser-Schutzfilter wirkt und in einem Wellenlängen-Bereich zwischen 800 nm bis 2'000 nm einen Schutz mit einer Schutzstufe grösser oder gleich L4 erzielt, und eine sichtbare Transmission von über 30% hat.

7. Optisches Schutzfilter gemäss Anspruch 6, bei welchem das Material von einer oder mehrere der Teillinsen (1, 3, 5) einen Farbstoff beinhaltet, wodurch das optische Schutzfilter bei einer Wellenlänge von 532 nm eine Schutzstufe grösser oder gleich L4 aufweist.

8. Optisches Schutzfilter gemäss einem der vorangehenden Ansprüche, aufweisend eine oder mehrere optische Filterschichten (11) mit variabler Durchlässigkeit, wobei vorzugsweise diese Filterschichten (11) auf gekrümmten oder flexiblen Substraten angeordnet sind.

9. Optisches Schutzfilter gemäss Anspruch 8, wobei die einen oder mehreren Filterschichten (11) mit variabler Durchlässigkeit elektrisch steuerbar sind und einen Flüssigkristall und/oder ein guest-host Zelle aufweisen. :

10. Optisches Schutzfilter gemäss Anspruch 8, wobei die einen oder mehreren Filterschichten (11) mit variabler Durchlässigkeit selbständig abdunkelnd sind und eine photochrome Schicht aufweisen.

11. Optisches Schutzfilter gemäss Anspruch 8, aufweisend zwei oder mehr in Serie angeordnete Filterschichten (11) gemäss den Ansprüchen 9 und/oder 10.

12. Schweisserschutzvorrichtung, insbesondere eine Schweisserschutzmaske oder eine Schweisserschutzbrille, aufweisend ein optisches Schutzfilter (1, 3) gemäss einem der vorangehenden Ansprüche.

13. Verfahren zur Herstellung eines optischen Schutzfilters gemäss einem der Ansprüche 1 bis 11, welches Verfahren die folgenden Schritte aufweist:
• Bereitstellen eines flexiblen Substrates (4);
• Aufbringen des Dünnschichtfilters (2) auf das flexible Substrat (4) im ebenen Zustand, dadurch Bilden einer ersten Teillinse (1);
• Biegen des ersten Teillinse (1) und Verbinden der ersten Teillinse (1) mit einer zweiten Teillinse (3).

14. Verfahren zur Herstellung eines optischen Schutzfilters gemäss Anspruch 13, wobei der Schritt zum Biegen und Verbinden der ersten Teillinse (1) aufweist:
• Pressen der ersten Teillinse (1) gegen eine gekrümmte Fläche der zweiten Teillinse (3), dadurch Biegen der ersten Teillinse (1);
• Fixieren der ersten Teillinse (1) bezüglich der zweiten Teillinse (3).

15. Verfahren zur Herstellung eines optischen Schutzfilters gemäss Anspruch 13, wobei der Schritt zum Verbinden der ersten mit der zweiten Teillinse aufweist:
• Biegen der ersten Teillinse (1) und Einsetzen in eine Spritzgussform (9);
• Anspritzen der zweiten Teillinse (3) an die erste Teillinse (1).
